# EUROPEAN PATENT SPECIFICATION

(11) **EP 4 061 895 B1**
(45) Date of publication and mention of the grant of the patent: **15.01.2025**
(21) Application number: 20815905.3
(22) Date of filing: 19.11.2020
(51) Int. Cl.: C09D 11/101, C09D 11/322

(54) **PRINTING INK**
DRUCKTINTE
ENCRE D'IMPRESSION

(30) Priority: 20.11.2019 GB 201916902
(43) Date of publication of application: 28.09.2022
(73) Proprietor: Fujifilm Speciality Ink Systems Limited, Broadstairs, Kent CT10 2LE (GB)
(72) Inventor: PHILLIPS, Andrew, Broadstairs Kent CT10 2LE (GB)
(74) Representative: Elkington and Fife LLP
(86) International application number: PCT/GB2020/052947
(87) International publication number: WO 2021/099786

(56) References cited:
- EP-A1- 2 505 624
- EP-A1- 2 692 803
- EP-A1- 2 752 469
- EP-A1- 2 832 553
- EP-A1- 3 006 515
- EP-A1- 3 061 794
- EP-A1- 3 118 271
- JP-A- 2012 193 275
- JP-A- 2013 018 854
- JP-A- 2013 245 241

## Description

The present invention relates to a printing ink, and in particular to an inkjet ink that is suitable for food packaging.

In inkjet printing, minute droplets of black, white or coloured ink are ejected in a controlled manner from one or more reservoirs or printing heads through narrow nozzles on to a substrate which is moving relative to the reservoirs. The ejected ink forms an image on the substrate.

For high-speed printing, the inks must flow rapidly from the printing heads, and, to ensure that this happens, they must have in use a low viscosity, typically 200 mPas or less at 25°C, although in most applications the viscosity should be 50 mPas or less, and often 25 mPas or less. Typically, when ejected through the nozzles, the ink has a viscosity of less than 25 mPas, preferably 5-15 mPas and most preferably between 7-11 mPas at the jetting temperature which is often elevated to, but not limited to 40-50°C (the ink might have a much higher viscosity at ambient temperature). The inks must also be resistant to drying or crusting in the reservoirs or nozzles. For these reasons, inkjet inks for application at or near ambient temperatures are commonly formulated to contain a large proportion of a mobile liquid vehicle or solvent such as water or a low-boiling solvent or mixture of solvents.

Another type of inkjet ink contains unsaturated organic compounds, termed monomers and/or oligomers which polymerise when cured. This type of ink has the advantage that it is not necessary to evaporate the liquid phase to dry the print; instead the print is cured, a process which is more rapid than evaporation of solvent at moderate temperatures.

Inkjet inks can be printed onto a variety of substrates. Food packaging represents a particular challenge on account of the strict safety limitations on the properties of materials which come into contact with food, including indirect additives like packaging inks. For printed food packaging, it is necessary to control and quantify the migration of the components of the printed image on the food packaging into the food products.

In order to reduce migration of the components of the printed ink for food packaging applications, inkjet inks using high functionality components are preferred. High functionality components are more likely to react, which means that they will not be available for migration. However, inkjet inks using high functionality components suffer from a number of issues, including reduced flexibility of the printed ink.

EP 3 118 271 relates to an active energy ray-curable inkjet ink composition comprising at least a monomer and a pigment, wherein the monomer comprises at least 2-(2-vinyloxyethoxy)ethyl acrylate and dipropylene glycol diacrylate, a content of 2-(2-vinyloxyethoxy)ethyl acrylate is 36 to 65% by weight in a total weight of the ink, a content of dipropylene glycol diacrylate is 31 to 63% by weight in the total weight of the ink, and a content of the pigment is 1 to c% by weight in the total weight of the ink, wherein the c is the pigment concentration at which the average absorbance at 320-380 nm in 2,000-fold dilution of the ink composition with dipropylene glycol diacrylate is 1.

EP 3 061 794 relates to an active energy ray curable inkjet ink for use in a single pass printing inkjet system, the inkjet ink containing a colorant, a monomer and at least one initiator, wherein the sum of the integrated value(s) of absorbance across wavelengths from 380 to 410 nm of the initiator(s) is at least 35, and 0.02 ≤ amount of initiator/amount of monomer ≤ 0.50 (weight ratio) is satisfied.

EP 3 006 515 relates to an active energy ray-curable composition containing a (meth)acrylate vinyl ether polymerisable compound, a di(meth)acrylate polymerisation compound and a photopolymerisation initiator, and an ink composition for inkjet recording use.

EP 2 752 469 relates to an ink composition used in active energy ray-curable inkjet printing. The inkjet ink composition includes at least two types of polymerizable compounds selected from a group consisting of (A) 2-(2-vinyloxyethoxy) ethyl acrylate, (B) N-vinyl caprolactam, and (C) at least one type of bifunctional acrylate monomer including at least a diacrylate having a molecular weight of 250 or less.

EP 2 692 803 relates to an ink composition for use in active energy beam-curable inkjet printing. The active energy beam-curable inkjet ink composition contains at least polymerizable monomers (A) and a stabilizer (B), and contains essentially no water. The inkjet ink composition contains, as the polymerizable monomers (A), at least a polymerizable monomer (A-1) containing a vinyl ether group and an acryloyl group, and a polymerizable monomer (A-2) containing 2 or more acryloyl groups.

EP 2 505 624 relates to an ink composition which is used for active energy ray-curable inkjet printing. The composition comprises a polymerizable monomer (A) and photopolymerization initiators (B), the polymerizable monomer comprising 2-(2-vinyloxyethoxy)ethyl acrylate (A-1), and the photopolymerization initiators comprising oligo(2-hydroxy-2-methyl-1-(4-(1-methylvinyl)phenyl)propanone) (B-1) and other initiator (B-2).

EP 2 832 553 relates to an inkjet recording method and a printed matter. The inkjet recording method includes discharging an ink composition onto a support, and irradiating active rays at an oxygen partial pressure of 0.15 atm or less to cure the ink composition, in which the support is a resin film having a film thickness of 10 µm to 90 µm; and the ink composition contains a polyfunctional (meth)acrylate compound, a monofunctional (meth)acrylate compound, and N-vinyllactams in a total amount of 60% by mass or more with respect to the total ink composition, and contains a polymerization initiator, and the content of the polymerization initiator having a molecular weight of less than 340 is less than 1% by mass of the total ink composition.

JP 2013-245241 relates to a pigment-dispersed composition for providing an inkjet ink. The pigment-dispersed composition contains a pigment having 10-400 µmol/g surface acid value and comprises a metal lake compound of a rhodamine-based dye, and which is obtained by dispersing the pigment by a wet dispersion method. There is provided another pigment-dispersed composition which contains ≥50% of at least one monomer selected from DPGDA (dipropylene glycol diacrylate), VEEA (2-(2-vinyloxy ethoxy)ethyl acrylate), LA (lauryl acrylate), DVE-3 (triethylene glycol divinyl ether), DVE-2 (diethylene glycol divinyl ether), NDDA (1,9-nonanediol diacrylate) and DDDA (1,10-decanediol diacrylate).

JP 2013-018854 relates to a photocuring ink composition comprising: a vinyl ether group-containing (meth)acrylic acid ester; a diacrylic acid ester compound; and a photopolymerization initiator.

JP 2012-193275 relates to an active energy ray-curable inkjet ink composition containing a diacrylate monomer having a 10 carbon chain linear or branched chain structure; and a printed matter printed by using the composition.

There is therefore a need in the art to provide an inkjet ink, which balances low migration and improved flexibility of the printed ink.

Accordingly, the present invention provides an inkjet ink comprising 1,10-decanediol diacrylate (DDDA) in combination with lauryl acrylate and/or 2-(2-vinyloxy ethoxy)ethyl acrylate (VEEA), at least one divinyl ether monomer, one or more photoinitiators and optionally a colourant, wherein DDDA is present in 10-45% by weight, based on the total weight of the ink.

The inventors have surprisingly found that an inkjet ink that comprises the specific blend of components, in particular DDDA in the claimed amount, in combination with lauryl acrylate and/or VEEA, provides the necessary balance of reduced migration and improved flexibility of the printed ink.

The present invention will now be described with reference to the drawings, in which:
Fig. 1 shows a photograph of a comparative ink which shows cracking after folding to 90 degrees;
Fig. 2 shows a photograph of a comparative ink which shows cracking after folding to 90 degrees;
Fig. 3 shows a photograph of a comparative ink which shows cracking after folding to 90 degrees; and
Fig. 4 shows a photograph of an ink of the invention which shows no cracking after folding to 90 degrees.

The inkjet ink of the present invention comprises 10-45% by weight of 1,10-decanediol diacrylate (DDDA), based on the total weight of the ink. DDDA is a well-known monomer in the art. It is a difunctional (meth)acrylate monomer having the following chemical formula: 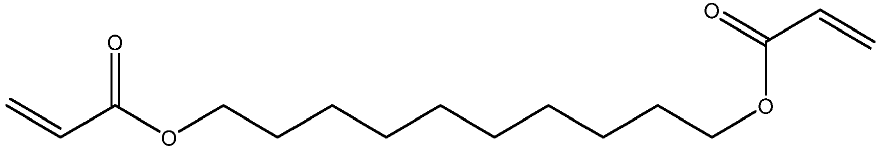
1,10-decanediol diacrylate (DDDA)
mol wt 310 g/mol

It has surprisingly been found that 10-45% by weight of DDDA, in combination with lauryl acrylate and/or VEEA, provides the necessary balance of reduced migration and improved flexibility of the printed ink.

In a preferred embodiment, the inkjet ink comprises 10-40% by weight of DDDA, based on the total weight of the ink, more preferably 15-35% by weight of DDDA, based on the total weight of the ink.

The inkjet ink of the present invention comprises lauryl acrylate and/or 2-(2-vinyloxy ethoxy)ethyl acrylate (VEEA). The inkjet ink of the present invention therefore comprises lauryl acrylate, VEEA, or lauryl acrylate and VEEA.

In a preferred embodiment, the inkjet ink of the present invention comprises lauryl acrylate.

Lauryl acrylate is a well-known monomer in the art. It is a monofunctional (meth)acrylate monomer having the following chemical structure: 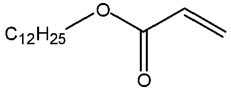
Lauryl acrylate
mol wt 240 g/mol

In a preferred embodiment, the inkjet ink comprises VEEA.

2-(2-vinyloxy ethoxy)ethyl acrylate (VEEA) is also a well-known monomer in the art. It is a difunctional monomer. More specifically, it is a difunctional vinyl ether (meth)acrylate monomer having the following chemical structure: 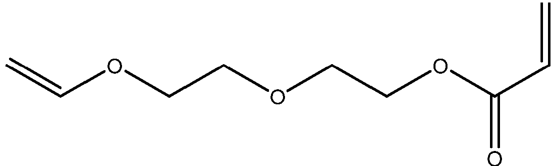
2-(2-vinyloxy ethoxy)ethyl acrylate
mol wt 186 g/mol

In a preferred embodiment, the inkjet ink comprises lauryl acrylate and VEEA.

Preferably, the lauryl acrylate is present in 5-40% by weight, based on the total weight of the ink, more preferably 10-30% by weight, based on the total weight of the ink, and most preferably 15-25% by weight, based on the total weight of the ink.

Preferably, the VEEA is present in 5-40% by weight, based on the total weight of the ink, more preferably 5-20% by weight, based on the total weight of the ink, and most preferably 7-15% by weight, based on the total weight of the ink.

In a preferred embodiment, the lauryl acrylate and/or VEEA is present in total in 5-40% by weight, based on the total weight of the ink.

Preferably, the lauryl acrylate and VEEA is present in total in 5-40% by weight, based on the total weight of the ink, more preferably in 10-30% by weight, based on the total weight of the ink.

In a preferred embodiment, the inkjet ink comprises 10-45% by weight of 1,10-decanediol diacrylate (DDDA), 10-30% by weight of lauryl acrylate, 5-20% by weight of 2-(2-vinyloxy ethoxy)ethyl acrylate (VEEA), one or more photoinitiators and optionally a colourant, wherein the amounts are based on the total weight of the ink. It has been found that this inkjet ink having the specific blend of components in the preferred amounts provides the necessary balance of reduced migration and improved flexibility of the printed ink.

In a further preferred embodiment, the inkjet ink comprises 10-45% by weight of 1,10-decanediol diacrylate (DDDA), 5-20% by weight of 2-(2-vinyloxy ethoxy)ethyl acrylate (VEEA), one or more photoinitiators, optionally lauryl acrylate, and optionally a colourant, wherein the amounts are based on the total weight of the ink, and wherein the ink is substantially free of monofunctional monomer, other than lauryl acrylate. It has been found that this inkjet ink having the specific blend of components in the preferred amounts provides the necessary balance of reduced migration and improved flexibility of the printed ink.

In a particularly preferred embodiment, the inkjet ink comprises 10-45% by weight of 1,10-decanediol diacrylate (DDDA), 10-30% by weight of lauryl acrylate, 5-20% by weight of 2-(2-vinyloxy ethoxy)ethyl acrylate (VEEA), one or more photoinitiators and optionally a colourant, wherein the amounts are based on the total weight of the ink, and wherein the ink is substantially free of monofunctional monomer, other than lauryl acrylate.

The inkjet ink of the present invention comprises at least one additional difunctional monomer, other than DDDA and VEEA. The at least one additional difunctional monomer, other than DDDA and VEEA, includes at least one divinyl ether monomer and can also include any other difunctional monomer known in the art.

As is known in the art, monomers may possess different degrees of functionality, which include mono, di, tri and higher functionality monomers. Mono and difunctional are intended to have their standard meanings, i.e. one or two groups, respectively, which take part in the polymerisation reaction on curing. Multifunctional (which does not include difunctional) is intended to have its standard meanings, i.e. three or more groups, respectively, which take part in the polymerisation reaction on curing.

The functional group of the difunctional radiation-curable monomer may be the same or different but must take part in the polymerisation reaction on curing. Examples of such functional groups include any groups that are capable of polymerising upon exposure to radiation and are preferably selected from a (meth)acrylate group and a vinyl ether group.

The substituents of the difunctional monomer are not limited other than by the constraints imposed by the use in an ink-jet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

The at least one additional difunctional monomers, other than DDDA and VEEA, includes divinyl ether monomers and may also include difunctional (meth)acrylate monomers, vinyl ether (meth)acrylate monomers and mixtures thereof.

For the avoidance of doubt, (meth)acrylate is intended herein to have its standard meaning, i.e. acrylate and/or methacrylate.

In a preferred embodiment, the inkjet ink comprises at least one, preferably at least two additional difunctional monomers, other than DDDA and VEEA, including at least one divinyl ether monomer.

In a preferred embodiment, the inkjet ink comprises 10-50% by weight, preferably 15-45% by weight of at least one additional difunctional monomers, other than DDDA and VEEA, based on the total weight of the ink, including at least one divinyl ether monomer.

Preferably, the inkjet ink comprises 30-90% by weight, preferably 35-80% by weight of all difunctional monomer, including DDDA and VEEA.

Difunctional (meth)acrylate monomers are well known in the art and a detailed description is therefore not required. Examples include 1,8-octanediol diacrylate, 1,9-nonanediol diacrylate, 1,11-undecanediol diacrylate and 1,12-dodecanediol diacrylate, polyethylene glycol diacrylate (for example tetraethylene glycol diacrylate, PEG200DA, PEG300DA, PEG400DA, PEG600DA), dipropylene glycol diacrylate (DPGDA), tricyclodecane dimethanol diacrylate (TCDDMDA), neopentylglycol diacrylate, 3-methyl-1,5-pentanediol diacrylate (3-MPDDA), and the acrylate esters of ethoxylated or propoxylated glycols and polyols, for example, propoxylated neopentylglycol diacrylate (NPGPODA), and mixtures thereof. Also included are esters of methacrylic acid (i.e. methacrylates), such as hexanediol dimethacrylate, 1,8-octanediol dimethacrylate, 1,9-nonanediol dimethacrylate, 1,11-undecanediol dimethacrylate and 1,12-dodecanediol dimethacrylate, triethyleneglycol dimethacrylate, diethyleneglycol dimethacrylate, ethyleneglycol dimethacrylate, 1,4-butanediol dimethacrylate and mixtures thereof. Polyethylene glycol diacrylate is preferred and PEG600DA is particularly preferred.

Examples of a divinyl ether monomer include triethylene glycol divinyl ether (DVE-3), diethylene glycol divinyl ether, 1,4-cyclohexanedimethanol divinyl ether, bis[4-(vinyloxy)butyl] 1,6-hexanediylbiscarbamate, bis[4-(vinyloxy)butyl] isophthalate, bis[4-(vinyloxy)butyl] (methylenedi-4,1-phenylene)biscarbamate, bis[4-(vinyloxy)butyl] succinate, bis[4-(vinyloxy)butyl]terephthalate, bis[4-(vinyloxymethyl)cyclohexylmethyl] glutarate, 1,4-butanediol divinyl ether and mixtures thereof.

Triethylene glycol divinyl ether (DVE-3) is particularly preferred. DVE-3 is preferred because of its low viscosity.

Examples of a vinyl ether (meth)acrylate monomer include 2-(2-vinyloxy ethoxy)ethyl methacrylate (VEEM).

In a preferred embodiment, the at least one additional difunctional monomer, other than DDDA and VEEA, including at least one divinyl ether monomer is selected from polyethylene glycol diacrylate (preferably PEG600DA), 3-methyl 1,5- pentanediol diacrylate (3-MPDDA), dipropylene glycol diacrylate (DPGDA), tricyclodecane dimethanol diacrylate (TCDDMDA), propoxylated neopentyl glycol diacrylate (NPGPODA), triethylene glycol divinyl ether (DVE-3) and mixtures thereof.

For food packaging applications, the at least one additional difunctional monomer, other than DDDA and VEEA, including at least one divinyl ether monomer is preferably selected from ethoxylated (5) hexanediol diacrylate (HD(EO)DA), polyethylene glycol (600) diacrylate (PEG600DA), tripropylene glycol diacrylate (TPGDA), 3-methyl 1,5-pentanediol diacrylate (3-MPDDA), tricyclodecane dimethanol diacrylate (TCDDMDA), propoxylated neopentyl glycol diacrylate (NPGPODA), triethylene glycol divinyl ether (DVE-3) and mixtures thereof.

In a preferred embodiment, the at least one additional difunctional monomer, other than DDDA and VEEA, comprises a difunctional (meth)acrylate monomer and a divinyl ether monomer.

The inkjet ink further comprises at least one divinyl ether monomer. Preferably, the inkjet ink further comprises triethylene glycol divinyl ether (DVE-3).

In a preferred embodiment, the inkjet ink comprises 10-50% by weight, preferably 15-40% by weight, more preferably 15-35% by weight of at least one divinyl ether monomer based on the total weight of the ink. Preferably, the inkjet ink comprises 10-50% by weight, preferably 15-40% by weight, more preferably 15-35% by weight of triethylene glycol divinyl ether (DVE-3) based on the total weight of the ink.

Divinyl ether monomers, and particularly triethylene glycol divinyl ether (DVE-3), have good solvency power. It has been found that the inclusion of at least one divinyl ether monomer, and particularly the inclusion of triethylene glycol divinyl ether (DVE-3), keeps the components of the ink, and particularly 1,10-decanediol diacrylate (DDDA) and lauryl acrylate, fully solubilized, even at lower temperatures, which improves jetting properties and storage stability.

Therefore, the inkjet ink comprises 1,10-decanediol diacrylate (DDDA) in combination with lauryl acrylate and/or 2-(2-vinyloxy ethoxy)ethyl acrylate (VEEA), at least one divinyl ether monomer (preferably triethylene glycol divinyl ether), one or more photoinitiators and optionally a colourant, wherein DDDA is present in 10-45% by weight, based on the total weight of the ink.

In a preferred embodiment, the inkjet ink comprises 10-45% by weight of 1,10-decanediol diacrylate (DDDA), 10-30% by weight of lauryl acrylate, 15-40% by weight of at least one divinyl ether monomer (preferably triethylene glycol divinyl ether), one or more photoinitiators, optionally 2-(2-vinyloxy ethoxy)ethyl acrylate (VEEA) and optionally a colourant, wherein the amounts are based on the total weight of the ink.

In a further preferred embodiment, the inkjet ink comprises 10-45% by weight of 1,10-decanediol diacrylate (DDDA), 10-30% by weight of lauryl acrylate, 15-40% by weight of at least one divinyl ether monomer (preferably triethylene glycol divinyl ether), one or more photoinitiators, optionally 2-(2-vinyloxy ethoxy)ethyl acrylate (VEEA), and optionally a colourant, wherein the amounts are based on the total weight of the ink, and wherein the ink is substantially free of monofunctional monomer, other than lauryl acrylate.

Monomers typically have a molecular weight of less than 600, preferably more than 200 and less than 450. Monomers are typically added to inkjet inks to reduce the viscosity of the inkjet ink. They therefore preferably have a viscosity of less than 150 mPas at 25°C, more preferably less than 100mPas at 25°C and most preferably less than 20 mPas at 25°C. Monomer viscosities can be measured using an ARG2 rheometer manufactured by T.A. Instruments, which uses a 40 mm oblique / 2° steel cone at 25°C with a shear rate of 25 s⁻¹.

The inkjet ink of the present invention may further comprise one or more multifunctional monomers (which do not include difunctional). The one or more multifunctional monomers may be any multifunctional monomers known in the art. The multifunctional monomer may possess different degrees of functionality, and a mixture including combinations tri and higher functionality monomers may be used.

The functional group of the multifunctional radiation-curable monomer may be the same or different but must take part in the polymerisation reaction on curing. Examples of such functional groups include any groups that are capable of polymerising upon exposure to radiation and are preferably selected from a (meth)acrylate group and a vinyl ether group.

The substituents of the multifunctional monomer are not limited other than by the constraints imposed by the use in an ink-jet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

In a preferred embodiment, the multifunctional radiation-curable monomer is selected from di-trimethylolpropane tetraacrylate (DiTMPTA), di-pentaerythritol hexaacrylate (DPHA), ethoxylated trimethylolpropane triacrylate (EOTMPTA), ethoxylated pentaerythritol tetraacrylate (EOPETTA) and mixtures thereof.

For food packaging applications, the multifunctional radiation-curable monomer is preferably selected from di-trimethylolpropane tetraacrylate (DiTMPTA), di-pentaerythritol hexaacrylate (DPHA), ethoxylated trimethylolpropane triacrylate (EOTMPTA), ethoxylated pentaerythritol tetraacrylate (EOPETTA) and mixtures thereof.

Preferably, the inkjet ink of the present invention comprises less than 5% by weight of a multifunctional monomer, based on the total weight of the ink. Preferably, the inkjet ink of the present invention comprises less than 4% by weight, more preferably less than 3% by weight, more preferably less than 2% by weight, more preferably less than 1% by weight and most preferably is substantially free of a multifunctional monomer, based on the total weight of the ink.

By substantially free is meant that only small amounts will be present, for example as impurities in the radiation-curable materials present or as a component in a commercially available pigment dispersion. In other words, no multifunctional monomer is intentionally added to the ink. However, minor amounts of multifunctional monomers, which may be present as impurities in commercially available inkjet ink components, are tolerated. For example, the ink may comprise less than 0.5% by weight of multifunctional monomers, more preferably less than 0.1% by weight of multifunctional monomers, most preferably less than 0.05% by weight of multifunctional monomers, based on the total weight of the ink. In a preferred embodiment, the inkjet ink is free of multifunctional monomers.

The inkjet ink of the present invention may further comprise one or more additional monofunctional monomers, other than lauryl acrylate. The one or more additional monofunctional monomers, other than lauryl acrylate, may be any monofunctional monomers known in the art, other than lauryl acrylate.

The ink preferably contains less than 5% by weight, more preferably less than 4% by weight, more preferably less than 3% by weight, more preferably less than 2% by weight and most preferably less than 1% by weight of monofunctional (meth)acrylate monomer, other than lauryl acrylate. More preferably, the ink contains less than 5% by weight, more preferably less than 4% by weight, more preferably less than 3% by weight, more preferably less than 2% by weight and most preferably less than 1 % by weight of monofunctional monomer, other than lauryl acrylate.

In a preferred embodiment, the inkjet ink is substantially free of monofunctional (meth)acrylate monomer, other than lauryl acrylate. Preferably, the inkjet ink is substantially free of monofunctional monomer, other than lauryl acrylate. As such, lauryl acrylate is preferably the sole monofunctional (meth)acrylate monomer present in the ink and more preferably, lauryl acrylate is the sole monofunctional monomer present in the ink. This has the advantage of reduced migration as low functionality components are more likely to migrate. Surprisingly, the inkjet ink of the present invention maintains flexibility, without recourse to such additional monofunctional monomers.

By substantially free is meant that only small amounts will be present, for example as impurities in the radiation-curable materials present or as a component in a commercially available pigment dispersion. In other words, no monofunctional monomer, other than lauryl acrylate, is intentionally added to the ink. However, minor amounts of monofunctional monomers, other than lauryl acrylate, which may be present as impurities in commercially available inkjet ink components, are tolerated. For example, the ink may comprise less than 0.5% by weight of monofunctional monomers, other than lauryl acrylate, more preferably less than 0.1% by weight of monofunctional monomers, other than lauryl acrylate, most preferably less than 0.05% by weight of monofunctional monomers, other than lauryl acrylate, based on the total weight of the ink. In a preferred embodiment, the inkjet ink is free of monofunctional monomers, other than lauryl acrylate.

In a preferred embodiment, the inkjet ink of the present invention may further comprise a radiation-curable (i.e. polymerisable) oligomer, such as a (meth)acrylate oligomer. Any radiation-curable oligomer that is compatible with the other ink components is suitable for use in the ink. Preferably, the inkjet ink comprises a (meth)acrylate oligomer.

The ink preferably contains 0.1-10% by weight of radiation-curable oligomer, based on the total weight of the ink.

The term "curable oligomer" has its standard meaning in the art, namely that the component is partially reacted to form a pre-polymer having a plurality of repeating monomer units, which is capable of further polymerisation. The oligomer preferably has a molecular weight of at least 600. The molecular weight is preferably 4,000 or less. Molecular weights (number average) can be calculated if the structure of the oligomer is known or molecular weights can be measured using gel permeation chromatography using polystyrene standards.

The oligomers may possess different degrees of functionality, and a mixture including combinations of mono, di, tri and higher functionality oligomers may be used. The degree of functionality of the oligomer determines the degree of crosslinking and hence the properties of the cured ink. The oligomer is preferably multifunctional meaning that it contains on average more than one reactive functional group per molecule. The average degree of functionality is preferably from 2 to 6.

Oligomers are typically added to inkjet inks to increase the viscosity of the inkjet ink or to provide film-forming properties such as hardness or cure speed. They therefore preferably have a viscosity of 150 mPas or above at 25°C. Preferred oligomers for inclusion in the ink of the invention have a viscosity of 0.5 to 10 Pas at 50°C. Oligomer viscosities can be measured using an ARG2 rheometer manufactured by T.A. Instruments, which uses a 40 mm oblique / 2° steel cone at 60°C with a shear rate of 25 s⁻¹.

Radiation-curable oligomers comprise a backbone, for example a polyester, urethane, epoxy or polyether backbone, and one or more radiation-curable groups. The oligomer preferably comprises a polyester, urethane or a polyester-based urethane backbone.

Particularly preferred radiation-curable oligomers are polyester acrylate oligomers as these have excellent adhesion and elongation properties. Most preferred are di-, tri-, tetra-, penta- or hexa-functional polyester acrylates, as these yield films with good solvent resistance.

The polymerisable group can be any group that is capable of polymerising upon exposure to radiation. Preferably the oligomers are (meth)acrylate oligomers. The oligomer may include amine functionality, as the amine acts as an activator without the drawback of migration associated with low-molecular weight amines. In a preferred embodiment, the radiation-curable oligomer is amine modified. In a particularly preferred embodiment, the radiation-curable oligomer is an amine-modified (meth)acrylate oligomer.

Particularly preferred radiation-curable oligomers are di-, tri-, tetra-, penta- or hexa-functional acrylates.

Other suitable examples of radiation-curable oligomers include epoxy based materials such as bisphenol A epoxy acrylates and epoxy novolac acrylates, which have fast cure speeds and provide cured films with good solvent resistance. However, for food packaging applications where quality and safety of the materials is a concern, the ink is preferably substantially free of bisphenol A based materials such as bisphenol A epoxy acrylates. Therefore, the ink is preferably substantially free of bisphenol A epoxy acrylates.

By substantially free is meant that only small amounts will be present, for example as impurities in the radiation-curable materials present or as a component in a commercially available pigment dispersion. In other words, no bisphenol A epoxy acrylates is intentionally added to the ink. However, minor amounts of bisphenol A epoxy acrylates which may be present as impurities in commercially available inkjet ink components, are tolerated. For example, the ink may comprise less than 0.5% by weight of bisphenol A epoxy acrylates, more preferably less than 0.1% by weight of bisphenol A epoxy acrylates, most preferably less than 0.05% by weight of bisphenol A epoxy acrylates, based on the total weight of the ink. In a preferred embodiment, the inkjet ink is free of bisphenol A epoxy acrylates.

The ink may also contain a resin. The resin preferably has a weight-average molecular weight (Mw) of 10-50 KDa, and most preferably 15-35 KDa. The Mw may be measured by known techniques in the art, such as gel permeation chromatography (GPC), using a polystyrene standard. The resin is preferably solid at 25°C. It is preferably soluble in the liquid medium of the ink (the radiation-curable diluent and, when present, additionally the solvent).

The resin is a passive (i.e. inert) resin, in the sense that it is not radiation curable and hence does not undergo cross-linking under the curing conditions to which the ink is subjected.

The resin may improve adhesion of the ink to the substrate. It is preferably soluble in the ink. The resin, when present, is preferably present at 0.1-5% by weight, based on the total weight of the ink.

In a preferred embodiment, the inkjet ink of the present invention also includes a colouring agent, which may be either dissolved or dispersed in the liquid medium of the ink. The colouring agent can be any of a wide range of suitable colouring agents that would be known to the person skilled in the art.

Preferably, the colouring agent is a dispersed pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 0.2-20% by weight, preferably 0.5-15% by weight, based on the total weight of the ink. A higher concentration of pigment may be required for white inks, for example up to and including 30% by weight, or 25% by weight, based on the total weight of the ink.

The ink of the present invention further comprises one or more photoinitiators. Preferred are photoinitiators, which produce free radicals on irradiation (free radical photoinitiators), such as bis(2,4,6-trimethylbenzoyl)-phenylphosphineoxide, 1-[4-(2-hydroxyethoxy)-phenyl]-2- hydroxy-2-methyl-1-propane-1-one and 2-hydroxy-1-[4-[4-(2-hydroxy-2-methylpropanoyl)phenoxy]phenyl]-2-methylpropan-1-one. Such photoinitiators are known and are commercially available, such as Omnirad 819, Omnirad 2959 and Esacure KIP 160.

Mixtures of free radical photoinitiators can be used and preferably, the ink comprises a plurality of free radical photoinitiators. The total number of free radical photoinitiators present is preferably two to five.

Preferably, the one or more photoinitiators is present from 1 to 20% by weight, preferably 5 to 15% by weight, based on the total weight of the ink.

The inkjet ink preferably dries primarily by curing, i.e. by the polymerisation of the monomers present, as discussed hereinabove, and hence is a curable ink. The ink does not, therefore, require the presence of water or a volatile organic solvent to effect drying of the ink.

The ink preferably contains less than 5% by weight, more preferably less than 2% by weight, more preferably less than 1% by weight of water and a volatile organic solvent, based on the total weight of the ink. Preferably, the inkjet ink is substantially free of water and volatile organic solvents. By substantially free is meant that only small amounts will be present, for example as impurities in the radiation-curable materials present or as a component in a commercially available pigment dispersion. In other words, no water and a volatile organic solvent is intentionally added to the ink. However, minor amounts of water and a volatile organic solvent, which may be present as impurities in commercially available inkjet ink components, are tolerated. For example, the ink may comprise less than 0.5% by weight of water and a volatile organic solvent, more preferably less than 0.1% by weight of water and a volatile organic solvent, most preferably less than 0.05% by weight of water and a volatile organic solvent, based on the total weight of the ink. In a preferred embodiment, the inkjet ink is free of water and a volatile organic solvent.

In a preferred embodiment, the inkjet ink comprises a surfactant. The surfactant controls the surface tension of the ink. Surfactants are well known in the art and a detailed description is not required. An example of a suitable surfactant is BYK307. Adjustment of the surface tension of the inks allows control of the surface wetting of the inks on various substrates, for example, plastic substrates. Too high a surface tension can lead to ink pooling and/or a mottled appearance in high coverage areas of the print. Too low a surface tension can lead to excessive ink bleed between different coloured inks. Surface tension is also critical to ensuring stable jetting (nozzle plate wetting and sustainability). The surface tension is preferably in the range of 18-40 mNm⁻¹, more preferably 20-35 mNm⁻¹ and most preferably 20-30 mNm⁻¹.

Other components of types known in the art may be present in the ink of the present invention to improve the properties or performance. These components may be, for example, additional surfactants, defoamers, dispersants, synergists, stabilisers against deterioration by heat or light other than an aerobic stabiliser, reodorants, flow or slip aids, biocides and identifying tracers.

The amounts by weight provided herein are based on the total weight of the ink.

The ink or inkjet ink sets may be prepared by known methods such as stirring with a high-speed water-cooled stirrer, or milling on a horizontal bead-mill.

The ink exhibits a desirable low viscosity, less than 100 mPas, preferably 50 mPas or less, more preferably 30 mPas or less and most preferably 20 mPas or less at 25°C. The ink most preferably has a viscosity of 8 to 20 mPas at 25°C. Viscosity may be measured using a digital Brookfield viscometer fitted with a thermostatically controlled cup and spindle arrangement, such as model DV1.

The present invention also provides an inkjet ink set, wherein the inkjet ink set of the invention has at least one ink that falls within the scope of the inkjet ink according to the present invention. Preferably, all of the inks in the set fall within the scope of the inkjet ink according to the present invention.

Usually, the inkjet ink set of the present invention is in the form of a multi-chromatic inkjet ink set, which typically comprises a cyan ink, a magenta ink, a yellow ink and a black ink (a so-called trichromatic set). This set is often termed CMYK. The inks in a trichromatic set can be used to produce a wide range of colours and tones.

The present invention also provides a method of inkjet printing using the above-described ink or ink set and a substrate having the ink or ink set cured thereon.

Accordingly, the present invention further provides a method of inkjet printing comprising inkjet printing the inkjet ink or inkjet ink set as defined herein onto a substrate and curing the ink.

Printing is performed by inkjet printing, e.g. on a single-pass inkjet printer, for example for printing (directly) onto a substrate, on a roll-to-roll printer or a flat-bed printer. Inkjet printing is well known in the art and a detailed description is not required.

The ink is jetted from one or more reservoirs or printing heads through narrow nozzles on to one or more substrates to form a printed image.

Print heads account for a significant portion of the cost of an entry level printer and it is therefore desirable to keep the number of print heads (and therefore the number of inks in the ink set) low. Reducing the number of print heads can reduce print quality and productivity. It is therefore desirable to balance the number of print heads in order to minimise cost without compromising print quality and productivity.

Substrates include those for packaging applications and in particular, flexible packaging applications. Examples include substrates composed of polyvinyl chloride (PVC), polystyrene, polyester, polyethylene terephthalate (PET), polyethylene terephthalate glycol modified (PETG) and polyolefin (e.g. polyethylene, polypropylene or mixtures or copolymers thereof). Further substrates include all cellulosic materials such as paper and board, or their mixtures/blends with the aforementioned synthetic materials.

Particularly preferred substrates are a food packaging. Food packaging is typically formed of flexible and rigid plastics (e.g. food-grade polystyrene and PE/PP films), paper and board (e.g. corrugated board). Printing onto a food packaging substrate represents a particular challenge on account of the strict safety limitations on the properties of materials which come into contact with food, including indirect additives like packaging inks. For printed food packaging, it is necessary to control and quantify the migration and/or odour of the components of the printed image on the food packaging into the food products. Specific exclusions based on their odour and/or migration properties include volatile organic solvents and many monomers typically used in UV curing inks.

Preferably, the monomers of the ink used in the method of the present invention are suitable for food packaging applications.

The inkjet ink of the present invention is also suitable for printing onto metal substrates and particularly coated metal substrates. In a preferred embodiment, the substrate is a metal substrate, more preferably a coated metal substrate and most preferably a polyester-coated metal substrate. The inkjet ink of the present invention printed onto such a substrate and cured has excellent flexibility.

When discussing the one or more substrates, it is the surface which is most important, since it is the surface which is wetted by the ink. Thus, at least the surface of the one or more substrates is composed of the above-discussed material.

In a preferred embodiment, the substrate is a laminate carton material comprising the following layers, in order: an inner polyethylene layer; an aluminium layer; a board layer, and an outer polyethylene layer. By inner is meant a surface of the substrate that would come into contact with food and by outer is meant a surface of the substrate that would come into contact with the inkjet ink used in the method of the present invention. More preferably, the outer polyethylene layer is corona treated to a surface tension of more than 45 dynes/cm using a Vetaphone unit. This provides improved adhesion of the ink.

In order to produce a high quality printed image a small jetted drop size is desirable. Preferably the inkjet ink is jetted at drop sizes below 90 picolitres, preferably below 35 picolitres and most preferably below 10 picolitres.

To achieve compatibility with print heads that are capable of jetting drop sizes of 90 picolitres or less, a low viscosity ink is required. A viscosity of 30 mPas or less at 25°C is preferred, for example, 8 to 12 mPas, 18 to 20 mPas, or 24 to 26 mPas. Ink viscosity may be measured using a Brookfield viscometer fitted with a thermostatically controlled cup and spindle arrangement, such as a DV1 low-viscosity viscometer running at 20 rpm at 25°C with spindle 00.

The inks or inkjet ink set are exposed to actinic (often UV) radiation to cure the ink.

It should be noted that the terms "dry" and "cure" are often used interchangeably in the art when referring to radiation-curable inkjet inks to mean the conversion of the inkjet ink from a liquid to solid by polymerisation and/or crosslinking of the radiation-curable material. Herein, however, by "drying" is meant the removal of the water by evaporation and by "curing" is meant the polymerisation and/or crosslinking of the radiation-curable material. Further details of the printing, drying and curing process are provided in WO 2011/021052.

Any suitable radiation source may be used. Suitable UV sources include mercury discharge lamps, fluorescent tubes, light emitting diodes (LEDs), flash lamps and combinations thereof. In a preferred embodiment, a UV LED light source is used to cure the ink.

UV LED light is emitted from a UV LED light source. UV LED light sources comprise one or more LEDs and are well known in the art. Thus, a detailed description is not required.

Any of the sources of actinic radiation discussed herein may be used for the irradiation of the inkjet ink. A suitable dose would be greater than 200 mJ/cm², more preferably at least 300 mJ/cm² and most preferably at least 500 mJ/cm². The upper limit is less relevant and will be limited only by the commercial factor that more powerful radiation sources increase cost. A typical upper limit would be 5 J/cm². Further details of the printing and curing process are provided in WO 2012/110815.

The ink cures to form a relatively thin polymerised film. The ink of the present invention typically produces a printed film having a thickness of 1 to 20 µm, preferably 1 to 10 µm, for example 2 to 5 µm. Film thicknesses can be measured using a confocal laser scanning microscope.

The present invention also provides a printed substrate obtainable by the method of the present invention. Preferably, the substrate is a food packaging. It has surprisingly been found that the printed substrate of the present invention having the inkjet ink of the present invention printed and cured thereon, has reduced migration and improved flexibility and hence reduced cracking of the printed ink. This is particularly beneficial for food packaging.

The present invention may also provide a cartridge containing the inkjet ink or inkjet ink set as defined herein.

The invention will now be described with reference to the following examples, which are not intended to be limiting.

### Examples

### Example 1

Inkjet inks were prepared according to the formulations set out in Table 1. The inkjet ink formulations were prepared by mixing the components in the given amounts. Amounts are given as weight percentages based on the total weight of the ink.

**Table 1.**

| **Component** | **Ink 1 (invention)** | **Ink 2 (invention)** | **Ink 3 (invention)** | **Ink 4 (comparative)** | **Ink 5 (comparative)** |
|---|---|---|---|---|---|
| TMP(EO)TA | | | | 41.99 | 46.10 |
| Lauryl acrylate | 21.99 | | 20.00 | | |
| DDDA | 30.00 | 19.99 | 42.00 | | |
| VEEA | | 10.00 | | | |
| UVP6600 (oligomer) | | 2.00 | | | |
| PEG 600 DA (difunctional monomer) | 6.00 | 10.00 | | | |
| Genomer 4215 (oligomer) | 4.00 | | 6.50 | | 2.75 |
| DVE-3 (difunctional monomer) | 12.68 | 32.68 | 15.25 | 32.68 | 34.40 |
| UV-22 (stabiliser) | 0.73 | 0.73 | 0.50 | 0.73 | 0.50 |
| Magenta pigment dispersion | 12.59 | 12.59 | | 12.59 | |
| Black pigment dispersion | | | 4.75 | | 4.75 |
| EFKA PX 4701 (dispersant) | 0.97 | 0.97 | | 0.97 | |
| Omnirad 819 (photoinitiator) | 3.84 | 3.84 | 3.00 | 3.84 | 4.00 |
| Omnirad 2959 (photoinitiator) | 2.87 | 2.87 | 2.00 | 2.87 | 3.00 |
| Esacure KIP 160 (photoinitiator) | 3.36 | 3.36 | 5.00 | 3.36 | 3.50 |
| Byk 307 (surfactant) | 0.97 | 0.97 | 1.00 | 0.97 | 1.00 |
| Total | 100.00 | 100.00 | 100.00 | 100.00 | 100.00 |

Lauryl acrylate, DDDA, VEEA and TMP(EO)TA are monomers, as defined herein. UVP6600 is a polyester acrylate oligomer. PEG 600 DA is polyethylene glycol diacrylate. Genomer 4215 is an aliphatic polyester-based urethane diacrylate oligomer. DVE-3 is triethyleneglycol divinyl ether.

The magenta pigment dispersion contains 42% DISPERBYK 168, 28% RAPI-CURE DVE3 and 30% cinquasia magenta L 4540 (total 100%).

The black pigment dispersion contains 30.00% DISPERBYK 168, 29.10% RAPI-CURE DVE3, 40.00% SP Black 250 Fluffy and 0.90% Solsperse 5000S (total 100%).

The magenta and black pigment dispersions were prepared by mixing the components in the given amounts and passing the mixture through a bead mill until the dispersion had a particle size of less than 0.3 microns. Amounts are given as weight percentages based on the total weight of the dispersion.

The inks of Table 1 were applied onto corrugated board by drawing the inks down using a red K1 bar, (6 micron), and leaving 4 layers of applied ink. The drawdowns were then run on a Digital Jenton machine set at 25m/min and 100% power, under a medium pressure Hg Heraeus Noblelight UV Lamp rated at 180W/cm, which gives a dose of 602mJ/cm2 and intensity of 3278 mW/cm2. The cured ink films were then assessed for migration and flexibility.

The inks of Table 1 all showed low migration.

To assess for flexibility, the corrugated board was folded to 90 degrees. On folding, inks 1, 2 and 3 have reduced cracking when compared to comparative inks 4 and 5. A reduction in cracking shows improved flexibility of inks 1, 2 and 3 when compared to comparative inks 4 and 5.

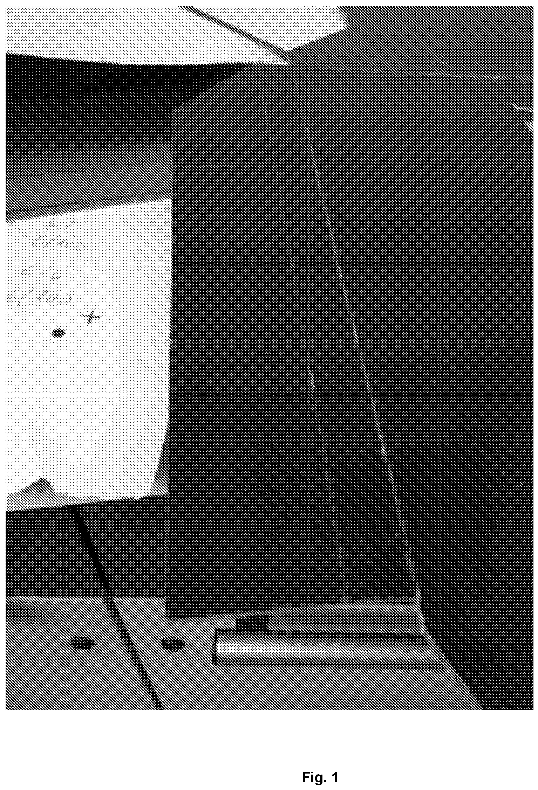

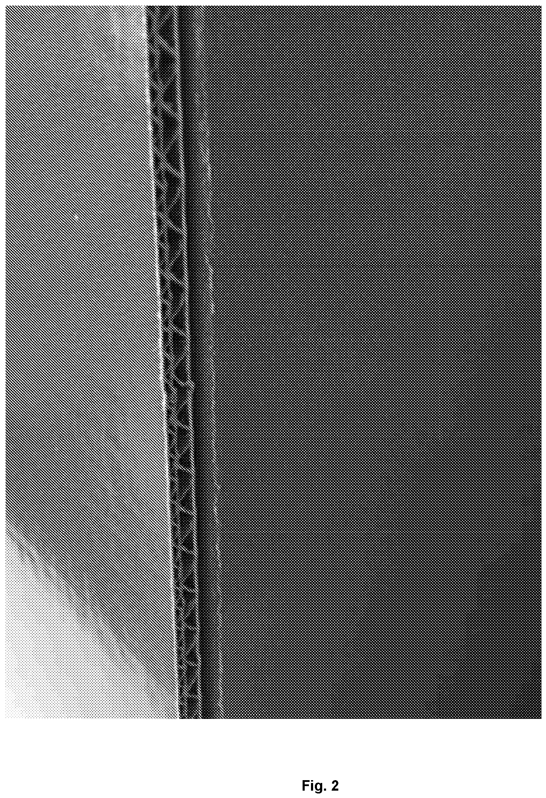

As can be seen in Figs 1 and 2, which are photographs of the corrugated board having comparative inks 5 and 4, respectively, printed and cured thereon and folded to 90 degrees, substantial cracking occurs using comparative inks 4 and 5. This is in contrast to the inks of the invention that have reduced cracking and hence increased flexibility.

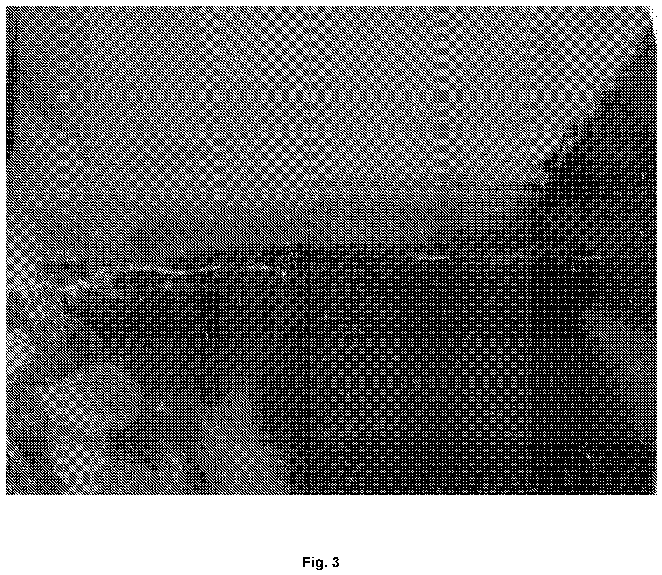

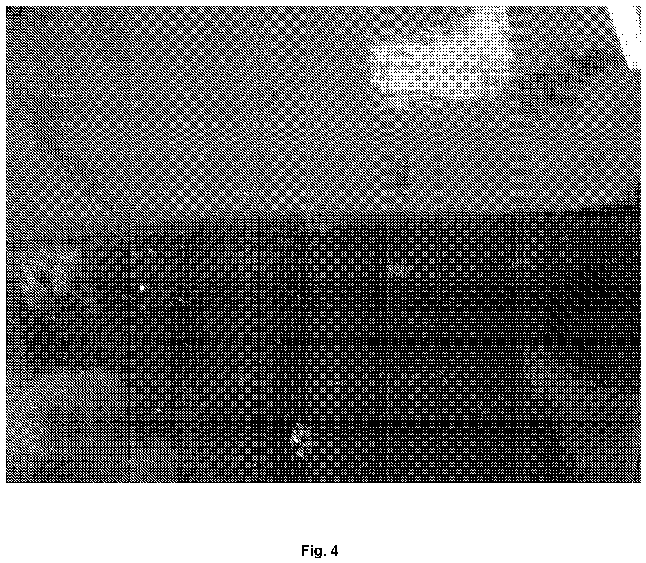

As can be seen in Figs 3 and 4, which are photographs of the corrugated board having comparative ink 5 and ink 3, respectively, printed and cured thereon and folded to 90 degrees, substantial cracking occurs using comparative ink 5 (visible cracking across the centre of the photograph) in contrast to using ink 3 that has no cracking and hence increased flexibility.

## Claims

1. An inkjet ink comprising 1,10-decanediol diacrylate (DDDA) in combination with lauryl acrylate and/or 2-(2-vinyloxy ethoxy)ethyl acrylate (VEEA), at least one divinyl ether monomer, one or more photoinitiators and optionally a colourant, wherein DDDA is present in 10-45% by weight, based on the total weight of the ink.

2. An inkjet ink as claimed in claim 1, wherein DDDA is present in 10-40% by weight, based on the total weight of the ink.

3. An inkjet ink as claimed in claims 1 or 2, wherein the lauryl acrylate and/or VEEA are present in total in 5-40% by weight, based on the total weight of the ink.

4. An inkjet ink as claimed in any preceding claim, wherein the inkjet ink comprises lauryl acrylate in 10-30% by weight, based on the total weight of the ink.

5. An inkjet ink as claimed in any preceding claim, wherein the inkjet ink comprises VEEA in 5-20% by weight based on the total weight.

6. An inkjet ink as claimed in any preceding claim, wherein the ink is substantially free of monofunctional monomer, other than lauryl acrylate.

7. An inkjet ink as claimed in any preceding claim, further comprising a radiation-curable oligomer.

8. An inkjet ink as claimed in claim 7, wherein the radiation-curable oligomer is a (meth)acrylate oligomer.

9. An inkjet ink as claimed in any preceding claim, wherein the colourant is a dispersed pigment.

10. An inkjet ink as claimed in any preceding claim, wherein the ink is substantially free of water and volatile organic solvents.

11. A printed substrate having the inkjet ink as claimed in any of claims 1-10 printed thereon.

12. A method of inkjet printing comprising inkjet printing the inkjet ink as claimed in any of claims 1-10 onto a substrate and curing the ink.

13. A printed substrate as claimed in claim 11 or a method of inkjet printing as claimed in claim 12, wherein the substrate is for food packaging.

## Patentansprüche

1. Tintenstrahltinte, umfassend 1,10-Decandioldiacrylat (DDDA) in Kombination mit Laurylacrylat und/oder 2-(2-Vinyloxyethoxy)ethylacrylat (VEEA), mindestens ein Divinylethermonomer, einen oder mehrere Photoinitiatoren und optional ein Färbemittel, wobei DDDA zu 10-45 Gewichts-%, bezogen auf das Gesamtgewicht der Tinte, vorhanden ist.

2. Tintenstrahltinte nach Anspruch 1, wobei DDDA zu 10-40 Gewichts-%, bezogen auf das Gesamtgewicht der Tinte, vorhanden ist.

3. Tintenstrahltinte nach Anspruch 1 oder 2, wobei das Laurylacrylat und/oder VEEA insgesamt zu 5-40 Gewichts-%, bezogen auf das Gesamtgewicht der Tinte, vorhanden sind.

4. Tintenstrahltinte nach einem vorhergehenden Anspruch, wobei die Tintenstrahltinte Laurylacrylat zu 10-30 Gewichts-%, bezogen auf das Gesamtgewicht der Tinte, umfasst.

5. Tintenstrahltinte nach einem vorhergehenden Anspruch, wobei die Tintenstrahltinte VEEA zu 5-20 Gewichts-%, bezogen auf das Gesamtgewicht, umfasst.

6. Tintenstrahltinte nach einem vorhergehenden Anspruch, wobei die Tinte im Wesentlichen frei von monofunktionellem Monomer, mit Ausnahme von Laurylacrylat, ist.

7. Tintenstrahltinte nach einem vorhergehenden Anspruch, ferner umfassend ein strahlungshärtbares Oligomer.

8. Tintenstrahltinte nach Anspruch 7, wobei das strahlungshärtbare Oligomer ein (Meth)acrylat-Oligomer ist.

9. Tintenstrahltinte nach einem vorhergehenden Anspruch, wobei das Färbemittel ein dispergiertes Pigment ist.

10. Tintenstrahltinte nach einem vorhergehenden Anspruch, wobei die Tinte im Wesentlichen frei von Wasser und flüchtigen organischen Lösungsmitteln ist.

11. Bedrucktes Substrat, das die Tintenstrahltinte nach einem der Ansprüche 1-10 aufweist.

12. Verfahren zum Tintenstrahldrucken, umfassend die Tintenstrahltinte nach einem der Ansprüche 1-10, auf ein Substrate und Härten der Tinte.

13. Bedrucktes Substrat nach Anspruch 11 oder ein Tintenstrahldruckverfahren nach Anspruch 12, wobei das Substrat zur Lebensmittelverpackung ist.

## Revendications

1. Encre pour jet d'encre comprenant du diacrylate de 1,10-décanediol (DDDA) en combinaison avec de l'acrylate de lauryle et/ou de l'acrylate de 2-(2-vinyloxyéthoxy)éthyle (VEEA), au moins un monomère d'éther divinylique, un ou plusieurs photo-initiateurs et éventuellement un colorant, ledit DDDA étant présent à raison de 10 à 45 % en poids, sur la base du poids total de l'encre.

2. Encre pour jet d'encre selon la revendication 1, ledit DDDA étant présent à raison de 10 à 40 % en poids, sur la base du poids total de l'encre.

3. Encre pour jet d'encre selon la revendication 1 ou 2, ledit acrylate de lauryle et/ou ledit VEEA étant présents au total à raison de 5 à 40 % en poids, sur la base du poids total de l'encre.

4. Encre pour jet d'encre selon l'une quelconque des revendications précédentes, ladite encre pour jet d'encre comprenant de l'acrylate de lauryle à raison de 10 à 30 % en poids, sur la base du poids total de l'encre.

5. Encre pour jet d'encre selon l'une quelconque des revendications précédentes, ladite encre pour jet d'encre comprenant du VEEA à raison de 5 à 20 % en poids, sur la base du poids total.

6. Encre pour jet d'encre selon l'une quelconque des revendications précédentes, ladite encre étant sensiblement exempte de monomère monofonctionnel, autre que l'acrylate de lauryle.

7. Encre pour jet d'encre selon l'une quelconque des revendications précédentes, comprenant en outre un oligomère durcissable par rayonnement.

8. Encre pour jet d'encre selon la revendication 7, ledit oligomère durcissable par rayonnement étant un oligomère de (méth)acrylate.

9. Encre pour jet d'encre selon l'une quelconque des revendications précédentes, ledit colorant étant un pigment dispersé.

10. Encre pour jet d'encre selon l'une quelconque des revendications précédentes, ladite encre étant sensiblement exempte d'eau et de solvants organiques volatils.

11. Substrat imprimé sur lequel est imprimée l'encre pour jet d'encre selon l'une quelconque des revendications 1 à 10.

12. Procédé d'impression à jet d'encre comprenant l'impression par jet d'encre de l'encre pour jet d'encre selon l'une quelconque des revendications 1 à 10 sur un substrat et le durcissement de l'encre.

13. Substrat imprimé selon la revendication 11 ou procédé d'impression à jet d'encre selon la revendication 12, ledit substrat étant destiné à l'emballage des aliments.
